Europäisches Patentamt

European Patent Office

Office européen des brevets

(11) Publication number: **0 208 400**
**A2**

## EUROPEAN PATENT APPLICATION

(21) Application number: 86303464.1

(22) Date of filing: 07.05.86

(51) Int. Cl.⁴: **F16D 13/71** , F16D 13/72

(30) Priority: 28.05.85 US 738328

(43) Date of publication of application:
14.01.87 Bulletin 87/03

(84) Designated Contracting States:
**DE FR GB**

(71) Applicant: Borg-Warner Automotive, Inc.
**3001 W. Big Beaver Road**
**Troy Michigan 48084(US)**

(72) Inventor: **Frantz, Robert Authur**
**4155 Three Oaks Boulevard, No. 3B**
**Troy Michigan 48098(US)**
Inventor: **Howell, Raymond Aubrey**
**31219 East Rutland**
**Birmingham Michigan 48009(US)**
Inventor: **Lech, Thaddeus, Jr.**
**45555 Spring Lane No. 212**
**Utica Michigan 48009(US)**

(74) Representative: **Williams, Trevor John et al**
**J.A. KEMP & CO. 14 South Square Gray's Inn**
**London WC1R 5EU(GB)**

(54) **Modular clutch assembly.**

(57) A modular clutch assembly (10) incorporating as a package a driven clutch plate assembly (32), a flywheel (11) and a cover plate assembly which can be delivered and installed as a unit with the flywheel being secured to the drive shaft from a vehicle engine and the transmission input shaft having a splined free end received in aligned openings in the cover (14) and pressure plate (28) and inserted into a complementary splined opening in the clutch plate.

EP 0 208 400 A2

Fig. 2.

## MODULAR CLUTCH ASSEMBLY

A clutch assembly for the manual transmission of an automotive vehicle presently consists of a relatively heavy flywheel bolted to a flange on the vehicle engine drive shaft, a cover which has a peripheral radial flange bolted to the flywheel, an annular pressure plate received in the cover and having peripheral lugs for securement to a plurality of flexible drive straps which have their opposite ends secured to the cover, a clutch plate positioned between and having friction facings adapted to engage the facing surfaces of the flywheel and pressure plate, and a diaphragm spring pivotally mounted in the cover and engaging the pressure plate to urge it towards the flywheel. The clutch plate is mounted on the splined end of a transmission input shaft to rotate the shaft upon clutch engagement, and a release bearing is mounted for axial movement on the input shaft to engage the fingers of the diaphragm spring and disengage the clutch plate. Presently, a customer has to purchase these parts separately and install them as separate items to form the clutch assembly.

A problem resides in the time and effort necessary for the installation of three separate items in a vehicle and possible alignment difficulties of several members rotating on a common axis. To overcome that problem, the clutch components of the present invention are formed as a modular assembly which the customer receives as a package and easily installs without the alignment and tolerance problems previously encountered.

The present invention comprehends the provision of a novel modular clutch assembly that is preassembled and ready for installation between the engine drive shaft and the transmission input shaft for a manual transmission of an automotive vehicle. The purchaser has only to make a single installation rather than separate installations of three items; namely, flywheel, driven member assembly and cover plate assembly.

The present invention also comprehends the provision of a novel modular clutch assembly wherein the normal mounting lugs on the annular pressure plate are eliminated and additional mass added to the outer diameter of the pressure plate. The drive straps have been omitted and a plurality of control clips or springs are secured to the periphery of the pressure plate and to the clutch cover to provide both the drive connection therebetween and the retraction force to disengage the clutch.

The present invention further comprehends the provision of a novel clutch assembly having a diaphragm spring pivot plate for the clutch cover assembly wherein substantially continuous circular depressions in the cover and in the pivot plate provide the opposed pivot surfaces for the diaphragm spring. Also, the pivot plate provides centering tabs which are received in the enlarged openings defining the inner ends of the diaphragm spring fingers.

Also comprehended by the present invention is the provision of a novel clutch assembly having a plurality of individual shields secured to the outer periphery of the clutch cover and acting in conjunction with openings in the cover as air flow guides to enhance cooling air flow through the clutch assembly.

Further objects are to provide a construction of maximum simplicity, efficiency, economy and ease of assembly and operation, and such further objects, advantages and capabilities as will later more fully appear and are inherently possessed thereby.

Figure 1 is a rear elevational view with portions broken away of the modular clutch assembly of the present invention.

Figure 2 is a cross sectional view of the clutch assembly taken on line 2-2 of Figure 1.

Figure 3 is an enlarged perspective view of the return clip utilized in the clutch assembly.

Figure 4 is a partial elevational view of the clutch assembly showing control springs and shields for the pressure plate.

Figure 5 is a partial cross sectional view taken on the line 5-5 of Figure 4.

Figure 6 is a partial side elevational view of the clutch assembly shown in Figure 5 with the shield removed.

Figure 7 is an enlarged top plan view of the control spring of Figure 4.

Figure 8 is an enlarged perspective view of the shield of Figure 4.

Figure 9 is a partial elevational view of an alternate embodiment of control spring in the clutch assembly.

Figure 10 is an enlarged side elevational view of the control spring of Figure 9.

Figure 11 is a partial cross sectional view of the clutch assembly of Figures 1 and 2 containing a diaphragm spring pivot plate.

Figure 12 is a partial elevational view showing the interaction of the pivot plate and diaphragm spring.

Figure 13 is a partial elevational view of the pivot plate of Figure 11.

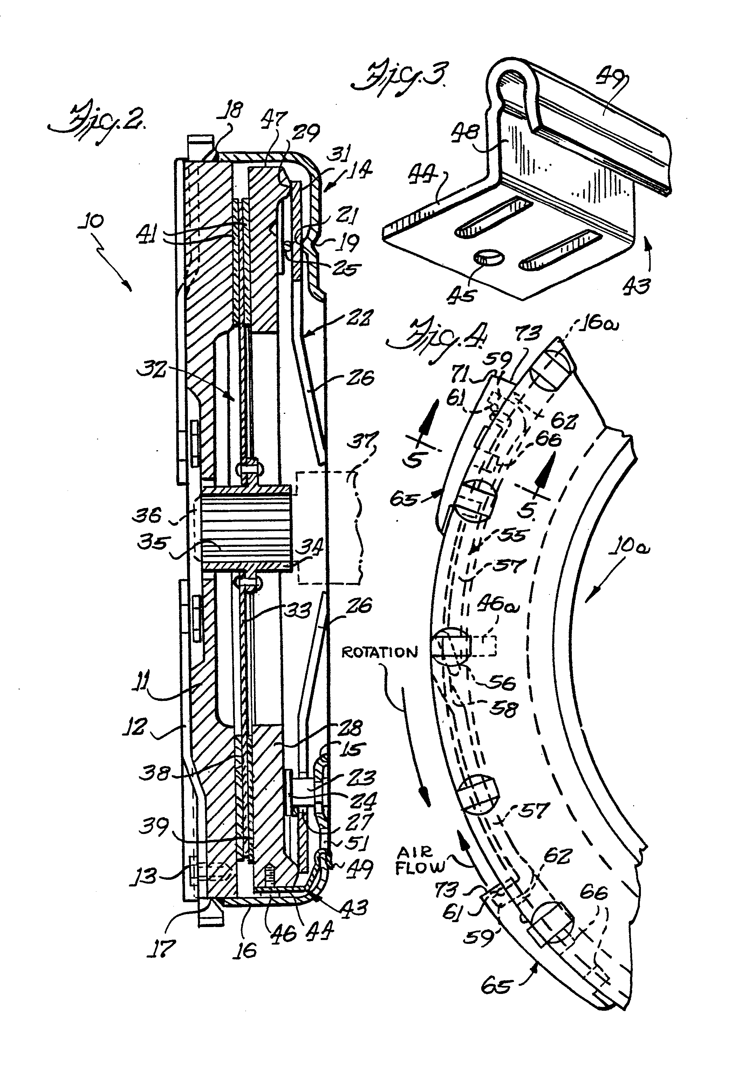

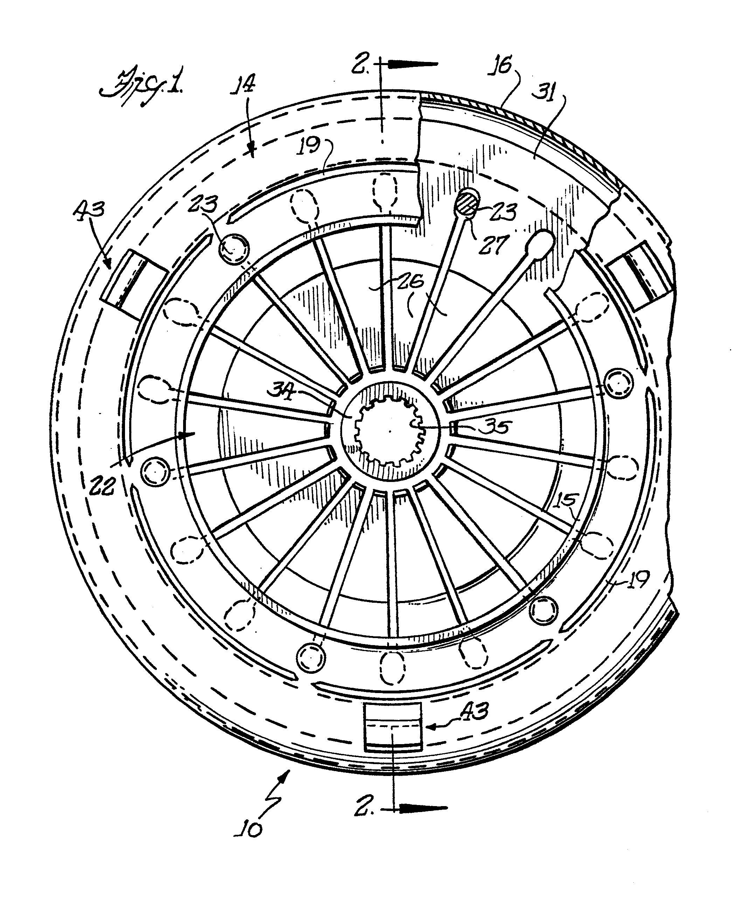

Referring more particularly to the disclosure in the drawings wherein are shown illustrative embodiments of the present invention, Figures 1 and 2 disclose a modular clutch assembly 10 to be utilized for a manual transmission in an automotive vehicle (not shown), which clutch assembly includes a circular flywheel 11 mounted on a retainer/ring gear 12 by bolts 13 or other suitable securing means in a manner similar to the mounting of a torque converter; the retainer 12 being suitably secured to the engine crank shaft (not shown). A clutch cover 14 comprises a generally annular member having a central opening defined by a curved inner lip 15 and having an outer axially extending flange 16 receiving and secured onto the periphery 17 of the flywheel 11 as by welding at 18.

The cover 14 has an interrupted substantially annular depression 19 forming a pivot surface 21 for a Belleville spring 22 mounted on a plurality of circumferentially equally spaced rivets 23 secured in openings in the cover adjacent the depression; each rivet having an enlarged head 24 locating a wire pivot ring 25 directly opposite to the pivot surface 21. The rivets are received in enlarged openings 27 formed at the inner ends of radial slots defining inwardly extending spring fingers 26 for the spring 22.

Within the enclosure formed by the flywheel 11 and clutch cover 14 is an annular pressure 28 and a clutch driven plate assembly 32. The pressure plate includes a generally annular fulcrum surface 29 adjacent its outer periphery to be engaged by the outer portion 31 of the Belleville spring 22. The driven plate assembly 32 includes a clutch plate 33 suitably secured to a central hub 34 having an internally splined passage 35 adapted to receive the splined end 36 of a transmission input shaft 37 leading to a manual transmission (not shown) for the vehicle. The clutch plate 33 extends radially outwardly between the facing friction surfaces 38 and 39 of the flywheel 11 and pressure plate 28, respectively, and annular friction facings 41,41 are secured to the opposite surfaces of the clutch plate to engage the friction surfaces 38 and 39.

To enhance the mass of the pressure plate 28 at its periphery, the conventional mounting lugs on the pressure plate and drive straps extending between the lugs and the cover were eliminated and replaced by a plurality of return clips 43, each of which includes a generally rectangular mounting base 44 with a central opening 45 receiving a rivet 46 secured to the periphery 47 of the pressure plate. An inwardly bent strap portion 48 terminates in a clip portion 49 which extends through a slot 51 in the cover to resiliently engage the edge of the slot. The use of the return clips 43 will position the pressure plate 24 accurately within the clutch cover and act to yieldably retract the pressure plate when the clutch is disengaged.

When this modular clutch device has been assembled, the only part that may be slightly out of alignment is the driven plate member 32 which is only retained between the flywheel and the pressure plate by the force of the diaphragm spring. Although shown in a conventional form, a bonded facing/cushion spring arrangement may be used, and a damper may separate and cushion the clutch facing area from the hub. To assemble in a vehicle, the retainer/ring gear 12 is secured to the engine crank shaft, and the clutch assembly is located adjacent to and the flywheel is secured by bolts 13 to the retainer/ring gear 12. Then the transmission input shaft 37 is inserted through the central opening in the cover 14 and the pressure plate 28 with the splined end 36 projecting into the complementary passage 35 of the clutch hub. Obviously, a release bearing (not shown) is mounted for axial reciprocation on the input shaft so as to engage the spring fingers 26 to engage and disengage the clutch during vehicle use.

This modular clutch design eliminates the outer radial mounting flange normally provided on the clutch cover to bolt the cover to the flywheel and, in combination with the elimination of the mounting lugs on the pressure plate, allow for a larger circumference driven member and pressure plate in a very small environment. The larger drive plate and pressure plate acts to smooth out engine performance and changes the drive line harmonics. Also, the close tolerances for the pressure plate are ameliorated. As previously stated, the elimination of the normal mounting lugs on the pressure plate allows for a larger plate circumference to provide additional mass; the extra mass increasing the inertia of the pressure plate while still maintaining a comparable component weight.

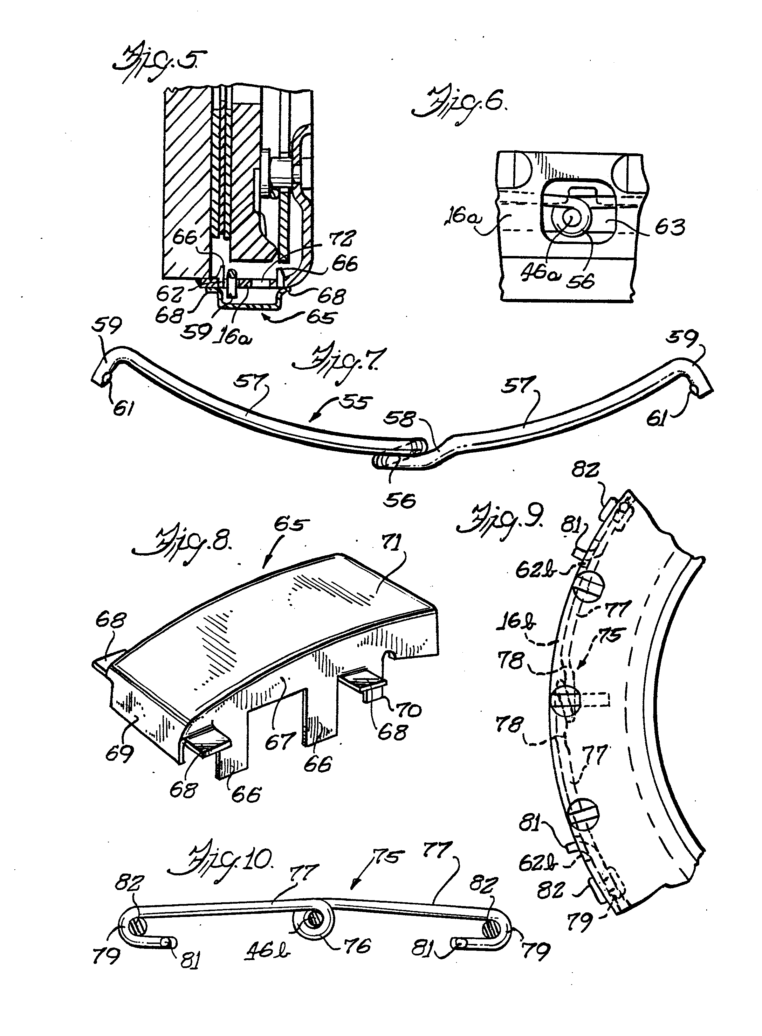

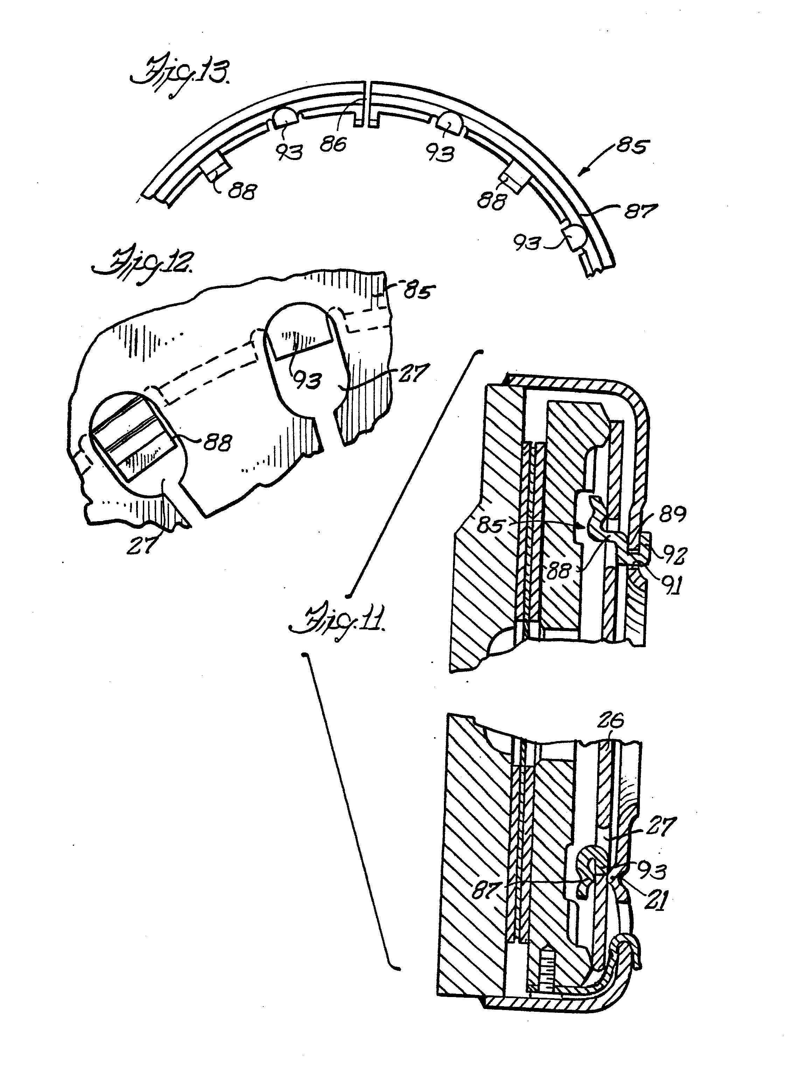

Figure 4 is a partial view of the modular clutch assembly 10a with an alternate driving and retracting means for the pressure plate. In this embodiment, the return clips of Figure 3 are replaced by control springs 55 which are formed of steel spring wire to provide a central loop 56 between a pair of oppositely extending legs 57,57. One leg of each spring has an offset 58 (Figure 7) to provide proper fit and clearance of the spring between the pressure plate 28a and cover 14a. The spring legs terminate in bent ends or hooks 59,59 having detents 61,61 received in slots 62,62 in the clutch cover flange 16a, and the spring is secured to the periphery of the pressure plate 28a by a rivet 46a extending through the loop 56. An opening 63 is located in the cover flange 16a opposite to and receiving the loop and rivet head to provide stabilizing stops when shipping cover assemblies minus the flywheel and/or driven member assembly.

The control spring 55, as assembled in Figures 4 and 5, is under tension in the normal engaged mode of the clutch assembly. As the clutch is disengaged, the spring will resume its "free" position prior to assembly, thereby pulling the pressure plate away from the driven member assembly. The two legs 57 and hooks 59 on the spring provide a positive driving means between the cover and pressure plate during both normal and coasting operations.

Also seen in Figures 4, 5 and 8, is a shield 65 secured to the cover flange 16a by a series of small barbs 66 depending from the edges of tapered sides 67 for the curved shield into slots in the cover flange. As seen in Figure 8, each shield also has positioning tabs 68 bent out of the sides and spaced from the barbs to contact the cover flange when the shield is properly assembled. Projections 69 at the rear of the shield and 70 on the sides forward of barbs 66 act to position the shield radially. A forward extension 71 acts to cover the protruding hook 59 of a control spring and an opening 72 in the flange 16a and provides a mouth 73 to induce air flow for cooling the clutch. The shield is curved and with the sides 67 provides a tapered contour. The extension 71 provides the "leading edge" of the shield so that a slight vacuum is created at the opening 73 drawing air through the opening 72 and the clutch assembly for a cooling effect to increase the effective capacity of the clutch.

Figures 9 and 10 disclose an alternate form of control spring 75 for the clutch assembly similar to control spring 55. This spring also includes a central loop 76 and a pair of oppositely extending legs 77, each offset at 78 in opposite directions from the loop. Each leg terminates in a generally U-shaped portion 79 with hooks 81 bent at the free ends received in slots 62b in flange 16b. When assembled, a rivet 46b projects through the loop 76 to secure the spring to the periphery of the pressure plate 28b, and rivets 82 are received in the U-bends 79 and secured to the cover flange 16b. Upon engagement and disengagement of the clutch, the control spring 75 can pivot about the rivets 82.

As seen in Figures 11, 12 and 13, a pivot ring 85 replaces the rivets 23 shown in Figures 1 and 2. This annular pivot ring 85 has a slot 86 therein to allow the ring to expand and fit the diaphragm spring 22, and incorporates a single formed substantially circular fulcrum bead 87 positioned opposite the generally circular fulcrum bead or pivot surface 21 in the clutch cover 14 on the opposite side of the diaphragm spring, and a plurality of circumferentially spaced integral tabs 88 extending rearwardly from the plate through openings 27 in the spring to a formed surface or shoulder 89 and then through slots 91 in the cover with the outer ends 92 bent over to clamp the cover between the bent end 92 and shoulder 89. Also, a plurality of circumferentially spaced centering tabs 93 alternate with the tabs 88 and are bent over and are positioned within other enlarged openings 27 separating the spring fingers 26.

This single formed pivot ring 85 attaches the Belleville spring to the cover stamping in a positive fashion and eliminates numerous loose parts. The ring also acts as a spacer to properly preload the Belleville spring and properly locate the spring relative to the cover. The integral tabs 88 having the surfaces 89 and bent formed ends 92 provide the proper clamping action at the spring when abutting the underside of the cover at the pivot surface or bead.

## Claims

1. A modular clutch assembly (10) adapted to be installed as a unit in an automotive vehicle between the engine and the manual transmission, comprising a flywheel (11) adapted to be secured to the engine drive shaft, a clutch cover (14) having an outer axial flange (16) sealingly secured to the periphery (17) of said flywheel, an annular pressure plate (28) located in said cover and having a friction surface (39) facing said flywheel, a clutch driven plate assembly (32) located between said flywheel and pressure plate and having a central hub (34) receiving the free end (36) of a transmission input shaft (37) for rotation therewith, a Belleville spring (22) pivotally mounted in the clutch cover for actuation of the pressure plate, and pressure plate driving and retraction means (43 or 55 or 75) secured to the periphery (47) of the pressure plate (28) and operatively connected to slots in the clutch cover.

2. A modular clutch assembly as set forth in Claim 1, wherein said clutch cover includes a substantially continuous inner pivot bead (21) for said Belleville spring (22), and a plurality of circumferentially spaced rivets (23) in said clutch cover to support an opposed pivot wire (25) for the Belleville spring.

3. A modular clutch assembly as set forth in Claim 1, wherein said retraction means comprises a plurality of circumferentially spaced return clips - (43) having a base portion (44) riveted to the periphery of the pressure plate (28) and a curled clip portion (49) received in a slot (51) in the clutch cover to engage the edge thereof.

4. A modular clutch assembly as set forth in Claim 3, in which each return clip (43) has an inwardly extending resilient intermediate portion - (48).

5. A modular clutch assembly as set forth in Claim 1, in which said retraction means comprises a plurality of control springs (55 or 75) spaced around the periphery of the pressure plate and secured thereto, each spring including a central loop (56 or 76) receiving the securing means (46a) and a pair of oppositely extending legs terminating in hooks (59 or 81) received in slots (62 or 62b) in said clutch cover (14a).

6. A modular clutch assembly as set forth in Claim 5, wherein said hooks (59) include detents - (61) to retain the legs secured in said slots.

7. A modular clutch assembly as set forth in Claim 5, including a curved shield (65) covering a hook end (59) of said control spring (55) and providing a tapered member secured on the exterior of said clutch cover (14a) to promote cooling air flow.

8. A modular clutch assembly as set forth in Claim 7, in which said shield (65) includes a curved surface with tapered sides (67), and securing barbs (66) and positioning tabs (68) formed on said sides to position and secure the shield onto said cover.

9. A modular clutch assembly as set forth in Claim 5, in which said control spring legs (77) each has a U-bend (79) with the hook (81) formed after the bend, and securing means (82) extending through each U-bend (79) to secure the legs to the clutch cover(14) and provide a pivot means for the spring leg.

10. A modular clutch assembly as set forth in Claim 9, wherein said securing means comprises rivets (46b,82) extending through said loop (76) and U-bends (79).

11. In a clutch assembly (10) comprising a flywheel (11), a clutch cover (14) secured to the flywheel, a pressure plate (28) spaced from said flywheel and rotatable with said clutch cover, a driven plate assembly (32) positioned between said flywheel and pressure plate and a diaphragm spring (22) pivotally mounted in said cover by an annular pivot bead (21) formed in said cover, said spring including radially extending slots terminating in enlarged openings (27) defining spring fingers - (26), the improvement comprising an annular split pivot ring (85) on the opposite side of the diaphragm spring from said cover pivot bead (21), said ring having a substantially circular pivot bead - (87) formed thereon facing the cover pivot bead, a plurality of integral tabs (88) extending through said spring and slots (91) formed in said clutch cover, and a plurality of alternating locating tabs (93) bent out of the plane of said ring.

12. A clutch assembly as set forth in Claim 11, wherein said positioning tabs (93) extend into said enlarged openings (27) between the diaphragm spring fingers.

13. A clutch assembly as set forth in Claim 12, wherein said first mentioned tabs (88) include a clamping shoulder (89) beyond the spring and extend through slots (91) in the clutch cover and are bent over (92) to clamp the ring (85), diaphragm spring (22) and clutch cover (14) together.

14. A clutch asembly as set forth in Claim 13, wherein said cover (14) is clamped between said shoulder (89) and said bent end (92).

Fig. 2.

Fig. 3.

Fig. 4.

ROTATION

AIR FLOW

Fig. 1.

Fig.5.

66    72
66
62    68
68    65
59    16a

Fig.6.

16a    63
46a    56

59    59
61    57    Fig.7.    57    61
55    58
56

Fig.8.    65    71

68
68
69
68    67    66
66    70
68

Fig.9.    82
81
62b
16b    77
78    75
78
77
81
62b
82
79

Fig.10.    75    77
82    77    82
79    81    46b    76    81    79

Fig.13.

Fig.12.

Fig.11.